# DEMANDE DE BREVET EUROPEEN

(11) **EP 2 325 025 A1**
(43) Date de publication de la demande: **25.05.2011**
(21) Numéro de dépôt: 10014740.4
(22) Date de dépôt: 18.11.2010
(51) Int. Cl.: B60B 7/00, B60B 21/02, B60B 21/06

(54) **Roue pour cycle et méthodes de fabrication d'une telle roue**

(30) Priorité: 19.11.2009 FR 0905551; 19.11.2009 FR 0905552
(71) Demandeur: SALOMON S.A.S., 74370 Metz-Tessy (FR)
(72) Inventeur: Mercat, Jean-Pierre, 74850 Chavanod (FR); Augris, Fabrice, 74540 Cusy (FR)

(57) **Abrégé**

Cette roue (2) pour cycle à rayons tendus (10), entre un moyeu (8) et une jante (6) est équipée d'un carénage (12) rapporté sur la jante. La Jante (6) est pourvue de deux gorges (34, 36) de réception de deux bords radiaux externes (64, 66) du carénage (12) et la jante (6) exerce, au niveau des deux gorges (34, 36), un effort centripète (E₆) de blocage des bords radiaux externes (64, 66) du carénage dans les gorges.

## Description

L'invention a trait à une roue pour cycle à rayons tendue, entre un moyeu et une jante de réception d'un pneumatique, cette roue étant équipée d'un carénage rapporté sur la jante.

Dans le domaine des cycles, notamment des bicyclettes de compétition, on connait des roues à rayons tendus équipées de jantes dites « aérodynamiques » qui réduisent la traînée des roues d'une bicyclette et améliorent les performances d'un cycliste. Les jantes de ces roues sont aujourd'hui principalement réalisées en composite à base de carbone. Elles sont donc d'un prix de revient élevé, ce qui limite leur utilisation aux cycles haut de gamme ou de compétition.

Il est connu de US-B-6 961 999 de réaliser une jante monobloc en aluminium avec une partie radiale interne profilée pour améliorer son aérodynamisme. La hauteur radiale d'une telle jante rend difficile son cintrage. Par ailleurs, cette jante est lourde.

Il est par ailleurs connu de WO-A-97/18098 de réaliser une jante de roue en matière plastique moulée par injection, qui comprend deux couronnes circulaires reliées par des ponts de matière plastique, ces ponts de matière étant relativement lourds. En outre, la structure en matériau plastique de la jante limite sa durée de vie car, lorsqu'elle travaille en compression, ce matériau se relaxe. Une telle jante n'est donc pas adaptée aux roues à rayons tendus.

On connaît par ailleurs de FR-A-2 344 411 une roue de bicyclette qui comprend une jante sur laquelle est rapporté un carénage en PVC moulé, en forme de demi-fuseau et qui est pourvu de lumières à travers lesquelles passent les rayons de la roue. Le carénage est fixé sur la jante par des vis qui sont difficiles d'accès et susceptibles de se desserrer au cours de la durée de vie de la roue.

Dans les roues connues, la fabrication du carénage est une opération complexe qui nécessite des quantités de matière relativement importantes, la matière utilisée pouvant avoir un coût unitaire élevé, notamment dans le cas de composite à base de carbone. En outre, les carénages connus sont relativement lourds, ce qui diminue les performances des roues de l'état de la technique.

C'est à ces inconvénients qu'entend plus particulièrement remédier l'invention en proposant une nouvelle roue dont l'aérodynamisme permet d'améliorer les performances d'un cycliste et qui ne présente pas les limitations de l'état de la technique.

A cet effet, l'invention concerne une roue pour cycle à rayons tendus, entre un moyeu et une jante pourvue de moyens de réception d'un pneumatique, cette roue étant équipée d'un carénage rapporté sur la jante. Selon un des aspects de l'invention, cette roue est caractérisée en ce que la jante est pourvue de deux gorges de réception de deux bords radiaux externes du carénage et en ce que la jante exerce, au niveau de ces deux gorges, un effort centripète de blocage des bords radiaux externes du carénage dans les gorges. Selon un autre des aspects de l'invention, cette roue est caractérisée en ce que le carénage est réalisé en matériau plastique thermoformé ou dans un matériau composite à matrice thermoformable.

Au sens de l'invention, une roue est constituée d'une jante, d'un moyeu, d'un carénage et d'un ensemble de rayons tendus entre la Jante et le moyeu et d'un carénage. Une telle roue est destinée à être équipée d'un pneumatique avec lequel elle constitue une « roue équipée »,

Grâce à l'un des aspects de l'invention, le carénage est efficacement maintenu en position sur la jante, sans avoir recours à des vis ou à d'autres éléments de fixation rapportés, ce qui assure la pérennité de l'assemblage réalisé entre la jante et le carénage, tout en limitant les risques d'entrée en vibration du carénage lorsque la roue est en cours d'utilisation.

Grâce à un autre des aspects de l'invention, le carénage peut être réalisé à partir d'une plaque ou feuille de faible épaisseur, avec des cadences de production élevées et dans un moule relativement simple. Ce carénage est donc léger et économique.

Selon des aspects avantageux mais non obligatoires de l'invention, une telle roue peut incorporer une ou plusieurs des caractéristiques suivantes, prises en toute combinaison techniquement admissible :
- Chaque gorge a une profondeur radiale supérieure à 0,6 mm, de préférence supérieure à 0,8 mm, de préférence encore égale à 1 mm, Ceci assure un ancrage efficace des bords radiaux externes du carénage dans les gorges de la jante.
- Les deux bords radiaux externes du carénage s'étendant en retrait, vers l'intérieur du carénage, par rapport à la surface extérieure de ce carénage.
- La Jante est en aluminium, ou en alliage à base d'aluminium, alors que le carénage est en matériau plastique, injecté ou thermoformé, en matériau composite à matrice thermoplastique ou thermodurcissable, en aluminium ou en alliage d'aluminium.
- La carénage comprend deux demi-coques formant chacune l'un des bords radiaux externes de ce carénage, ces demi-coques étant solidarisées ensemble au voisinage d'un bord radial interne du carénage.
- Le carénage est réalisé en matériau plastique thermoformé.
- Chaque paroi du carénage est équipée d'un ravisseur, ce qui lui permet de résister à un effort de flambage résultant de l'effort centripète exercé par la jante.
- Le carénage comprend deux demi-coques en matériau plastique thermoformé, ces demi-coques étant solidarisées ensemble au voisinage d'un bord radial interne du carénage,
- Les demi-coques sont solidarisées ensemble par soudage, collage ou assemblage mécanique de deux bords radiaux interne appartenant respectivement aux deux demi-coques. Selon une première approche, les deux bords radiaux internes des deux demi-coques sont soudés ensemble, face latérale contre face latérale ou tranche contre tranche. Selon une autre approche, ces bords radiaux internes sont soudés sur un anneau de liaison

disposé dans le volume interne du carénage. Selon encore une autre approche, ces bords radiaux Internes sont assemblés par rivetage ou boulonnage.
- Les bords radiaux internes des deux demi-coques sont recouverts d'un anneau de finition ou d'une baguette d'assemblage.
- Le matériau plastique thermoformé du carénage est une plaque multicouche d'épaisseur Inférieure à 1 mm, de préférence de l'ordre de 0,5 mm.
- Le matériau plastique thermoformé est au moins en partie transparent, alors qu'un décor est apposé sur la face Interne du carénage et visible à travers celui-ci.
- La Jante est pourvue de deux gorges de réception de deux bords radiaux externes du carénage et cette Jante exerce, au niveau des deux gorges, un effort centripète de blocage des bords radiaux externes du carénage dans ces gorges.

L'invention concerne également une première méthode de fabrication d'une roue telle que mentionnée ci-dessus, cette méthode comprenant des étapes consistant à :
a) fabriquer une ébauche ouverte de Jante en ménageant, sur un côté de cette ébauche destiné à être tourné vers le moyeu, deux gorges;
b) fabriquer le carénage ;
c) engager les deux bords radiaux externes du carénage dans les deux gorges, sur une partie de leur circonférence ;
d) fermer l'ébauche autour du carénage, en maintenant les bords radiaux externes du carénage en place dans ces gorges ;
e) monter les rayons sur la jante ;
f) monter les rayons sur le moyeu ; et
g) mettre en tension les rayons.

L'invention concerne également une deuxième méthode de fabrication d'une roue telle que mentionné ci-dessus, cette méthode comprenant des étapes consistant à :
a') fabriquer une Jante circulaire pourvue de deux gorges sur son côté destiné à être tourné vers le moyeu;
b') fabriquer le carénage ;
c'₁) porter le flasque à une température inférieure à la plage de température d'utilisation normale de la roue ou porter la jante à une température supérieure à la plage de température d'utilisation normale de la roue ;
c'₂) disposer le carénage radialement à l'intérieur de la jante, avec les bords radiaux externes du carénage en regard des gorges de la jante;
d') porter le carénage et la jante à température ambiante ;
e') monter les rayons sur la jante ;
f') monter les rayons sur le moyeu ;
g') mettre en tension les rayons.

L'invention concerne également une troisième méthode de fabrication d'une roue telle que mentionnée ci-dessus, cette méthode comprenant des étapes consistant à :
a") fabriquer une jante circulaire pourvue de deux gorges sur son côté destiné à être tourné vers le moyeu ;
b") fabriquer deux demi-coques constitutives du carénage ;
c"₁) monter une première demi-coque sur la jante en engageant un bord radial externe de la première demi-coque dans une première gorge de la jante, parmi ses deux gorges ;
c"₂) monter une deuxième demi-coque sur la jante en engageant un bord radial externe de la deuxième demi-coque dans la deuxième gorge de la jante, parmi ses deux gorges ;
d") solidariser ensemble les bords radiaux internes respectifs des première et deuxième demi-coques ;
e") monter les rayons sur la jantes ;
f") monter les rayons sur la moyeu ; et
g") mettre en tension les rayons.

Dans les trois méthodes ci-dessus, l'ordre des étapes a) et b), a') et b') ou a") et b") peut être Inversé. Dans les trois méthodes, on peut prévoir que la tension des rayons et/ou la pression d'un pneumatique monté sur la jante est utilisée pour exercer sur la jante l'effort centripète qui concourt au frettage des bords radiaux externes du carénage dans les gorges de la jante.

L'invention sera mieux comprise et d'autres avantages de celle-ci apparaîtront plus clairement à la lumière de la description qui va suivre de plusieurs modes de réalisation d'une roue conforme à son principe et de méthodes de fabrication d'une telle roue, donnée uniquement à titre d'exemple et faite en référence aux dessins annexés dans lesquels :
- la figure 1 est une vue en perspective d'une roue conforme à l'invention,
- la figure 2 est une coupe radiale partielle, à plus grande échelle, dans le plan II à la figure 1,
- la figure 3 est une vue à plus grande échelle du détail III à la figure 2,
- la figure 4 est une vue en perspective partielle de la roue des figures 1 et 2 en cours de fabrication,
- la figure 5 est une coupe de principe d'un moule utilisé pour la fabrication du carénage de la roue des figures 1 à 4, dans une première configuration,
- la figure 6 est une vue à plus grande échelle du détail VI à la figure 5,
- la figure 7 est une vue analogue à la figure 6, mais à plus petite échelle, lorsque le moule est dans une deuxième configuration d'utilisation,
- la figure 8 est une vue analogue à la figure 7, lorsque le moule est dans une troisième configuration d'utilisation,
- la figure 9 est une vue en perspective d'une plaque de matériau thermoplastique utilisé dans le moule des figures 5 à 8,
- la figure 10 est une coupe partielle, à plus grande échelle, selon la ligne X-X à la figure 9,
- la figure 11 est une vue en perspective analogue à la figure 10 au terme de l'opération de thermoformage réalisée dans le moule des figures 6 à 8,
- la figure 12 est une vue en perspective analogue à la figure 9 après évacuation des parties non utiles de la plaque thermoformée,
- la figure 13 est une vue correspondant au détail XIII à la figure 2 pour une roue conforme à un deuxième mode de réalisation de l'invention,
- la figure 14 est une coupe analogue à la figure 2 pour une roue conforme à un troisième mode de réalisation de l'invention,
- la figure 15 est une coupe comparable à la figure 14 représentant la roue en cours de fabrication, dans un autre plan de coupe,
- la figure 16 est une représentation schématique de principe d'une roue conforme au deuxième mode de réalisation en cours de fabrication par une méthode alternative, lors d'une étape de cette méthode,
- la figure 17 est une représentation analogue à la figure 16 lors d'une étape ultérieure de la méthode de fabrication,
   la figure 18 est une vue correspondant au détail XVIII à la figure 14 pour une roue conforme à un quatrième mode de réalisation de l'invention,
- la figure 19 est une vue en détail analogue à la figure 18, pour une roue conforme à un cinquième mode de réalisation de l'invention,
- la figure 20 est une vue de détail analogue à la figure 18, pour une roue conforme à un sixième mode de réalisation de l'invention,
- la figure 21 est une vue de détail analogue à la figure 18, pour une roue conforme à un septième mode de réalisation de l'invention.
- la figure 22 est une vue de détail analogue à la figure 18, pour une roue conforme à un huitième mode de réalisation de l'invention,
- la figure 23 est une vue en perspective, dans le sens de la flèche XXIII à la figure 20, et
- la figure 24 est une vue de détail analogue à la figure 18 pour une roue conforme à un neuvième mode de réalisation de l'invention.

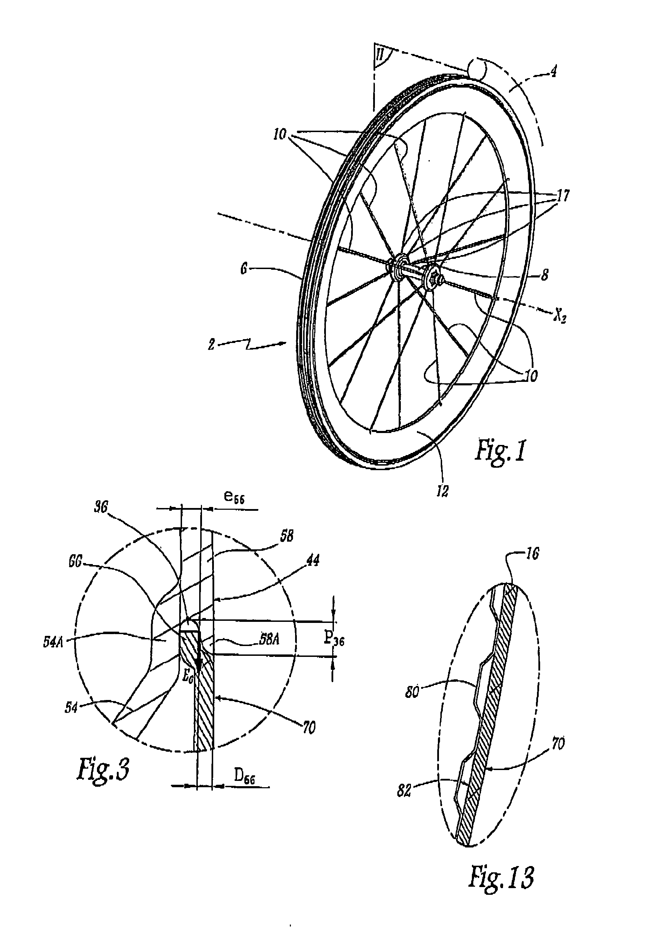

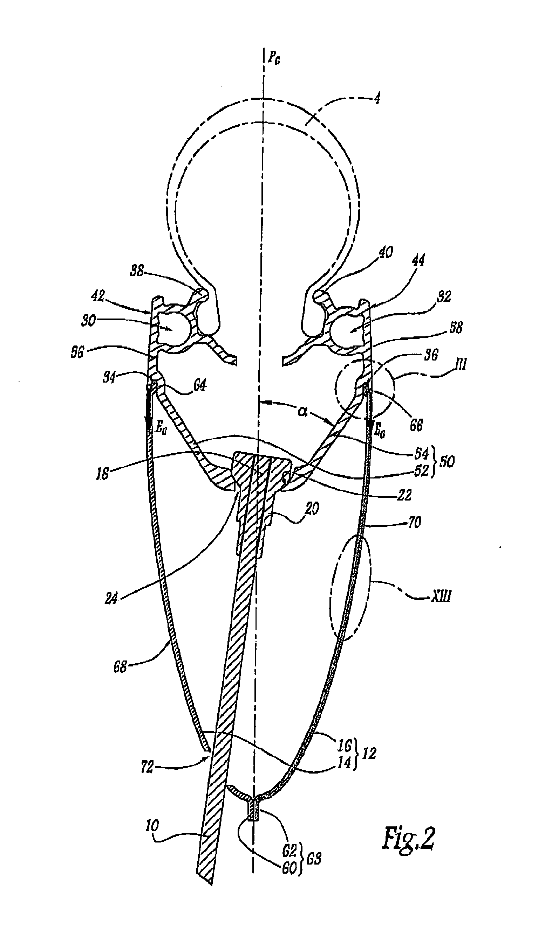

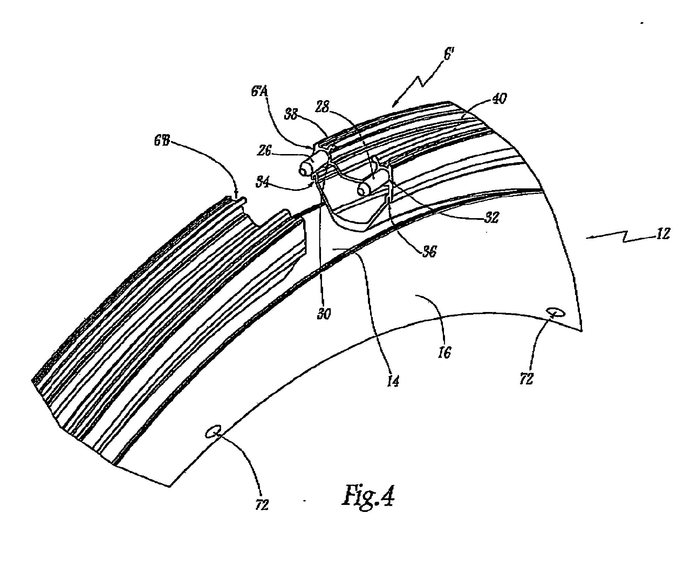

La roue 2 représentée aux figures 1 à 4 est destinée à être équipée d'un pneumatique 4 représenté partiellement et en traits mixtes aux figures 1 et 2. Au sens de la présente demande, un pneumatique peut être un pneumatique avec tringles ou bourrelets, destiné à coopérer avec des reliefs correspondant d'une Jante, ou un pneumatique tubulaire parfois dénommé « boyau » et collé sur la jante.

La roue 2 comprend une jante 6 en aluminium et un moyeu métallique 8 destiné à être fixé sur une partie d'une bicyclette, dans l'exemple sur la fourche avant, puisque la roue 2 est une roue avant de bicyclette. L'invention s'applique également à une roue arrière de bicyclette équipée d'une cassette de pignons.

Des rayons métalliques 10 sont tendus entre la jante 6 et le moyeu 8. Un carénage 12 appartient également à la roue 2 et est constitué de deux demi-coques 14 et 16 obtenues par thermoformage d'une plaque 100 de matériau thermoplastique à base de Polyméthylmétacrilate (PMMA).

Chaque rayon 10 est accroché par une première extrémité 17 sur le moyeu 8 et sa deuxième extrémité 18 est filetée. Un écrou 20 vissé sur l'extrémité 18 vient en appui contre un siège 22 formé autour d'un orifice 24 ménagé dans la jante 6 pour le passage de ce rayon.

La Jante 6 est obtenue par profilage d'aluminium. Les profilés sont ensuite cintrés selon une forme hélicoïdale. Ainsi, en tronçonnant les profilés cintrés sur deux parties de l'hélice sensiblement alignées, il est possible de réaliser une ébauche ouverte 6' de jante en forme de tronçon d'hélice sur 360°. La jante 6 est ensuite constituée à partir de cette ébauche 5', en mettant bout à bout les extrémités 6'A et 6'B de l'ébauche tronçonnée et en les rejoignant par des pions 26 et 28 engagés dans des logements correspondant 30 et 32 du profilé présents aux deux extrémités de l'ébauche 6'.

La jante 6 est pourvue de deux gorges 34 et 36 qui s'étendent du côté de le jante destiné à être tourné vers le moyeu 8 en configuration assemblée de la roue 2, c'est-à-dire à l'opposé des nervures 38 et 40 avec lesquelles collabore la pneumatique 4 qui équipe la roue 2.

On note P₈ un plan médian de la jante 6, c'est-à-dire un plan perpendiculaire à l'axe de rotation X₂ de la roue 2, le plan P₅ étant équidistant des surfaces latérales externes 42 et 44 de la jante 6. La jante 6 comprend une portion en cuvette 50 dans le fond de laquelle sont définis les orifices 24 et qui comporte deux voiles 52 et 54 globalement tronconiques, symétriques par rapport au plan P₆ et inclinés par rapport à ce plan d'un angle α de l'ordre de 45°.

Les gorges 34 et 36 sont respectivement ménagées dans les zones d'attache des voiles 52 et 54 sur les côtés 56 et 58 de la jante 6 qui délimitent les surfaces 42 et 44. Plus précisément, et comme il ressort de la figure 3, la gorge 36 est ménagée entre une portion terminale 54A du voile 54 et une extension 58A du côté 58, en direction du moyeu 8.

On note P₃₆ la profondeur radiale de la gorge 36, c'est-à-dire la distance entre le fond de cette gorge 36 et le bord libre de l'extension 58A, prise parallèlement au plan P₆. Cette profondeur est égale à 1 mm dans l'exemple représenté. Elle peut être inférieure, pour autant qu'elle demeure supérieure à 0,5 mm, de préférence à 0,8 mm.

Les demi-coques 14 et 16 sont chacune pourvue d'un bord radial interne 60 respectivement 62, ces bords étant soudés ensemble pour constituer le bord radial interne 63 du carénage 12, c'est-à-dire le bord de ce carénage tourné vers l'axe X₂. Chaque bord 60 ou 62 est rabattu vers l'axe X₂ et ces bords sont en appui surfacique, par leurs faces latérales en regard, l'un contre l'autre. Le bord radial interne du carénage est relativement éloigné de l'axe de la roue. Le carénage habille la jante. Il n'habille pas entièrement la roue comme c'est le cas des rouas lenticulaires.

On note respectivement 64 et 66 les bords radiaux externes des demi-coques 14 et 16. Le bord 66 a une épaisseur e₆₅ légèrement inférieure à la largeur de l'entrée de la gorge 36, c'est-à-dire à la distance entre les parties 54A et 58A, prises perpendiculairement au plan P₆. Cependant, l'épaisseur du bord 66 est légèrement supérieure à la largeur du fond de la gorge. Du fait de l'effort centripète exercée par la jante sur le carénage, le bord 66 est systématiquement guidé vers le fond de la gorge et est ainsi pincé par le fond de la gorge. Grâce à cette configuration on obtient un meilleur positionnement axial.

Le bord 66 s'étend en retrait, du côté du plan P₆, par rapport à la surface latérale externe 70 de la demi-coque 16, au voisinage de ce bord 66. En d'autres termes, le bord 66 est décalé, parallèlement à l'axe X₂, d'une distance non nulle d₆₆ par rapport à la surface 70. Ceci permet que, lorsque la bord 66 s'est engagé dans la gorge 36, les surfaces 44 et 70 sont sensiblement en alignement l'une de l'autre. Ceci améliore l'aérodynamisme de la roue 2.

De la même façon, le bord 64 est en retrait vers l'intérieur, c'est-à-dire en direction du plan P₆, par rapport à la surface latérale externe 68 de la demi-coque 14, de sorte que les surfaces 42 et 68 sont dans le prolongement l'une de l'autre.

En configuration montée de la roue 2 représentée aux figures 1 à 3, la jante 6 exerce sur chacun des bords 64 et 66 et au voisinage des gorges 34 et 36, une composante d'effort E₈ parallèle au plan P₈ et centripète, c'est-à-dire dirigé vers l'axe X₂. En d'autres termes, la jante 6 constitue une frette pour le carénage 12 qu'elle contraint grâce à l'effort centripète reparti E₆ qui s'exerce sur les bords 64 et 66 des demi-coques 14 et 16. Cet effort centripète de frettage E₆ résulte du serrage de la jante 6 autour du carénage 12.

En effet, lorsque le carénage 12 a été constitué par thermoformage des demi-coques 14 et 16 et assemblage de celles-ci, l'ébauche de jante 6' obtenue par tronçonnage du profité hélicoïdal, comme mentionné ci-dessus, peut être disposée autour de ce carénage en engageant une partie des bords 64 et 66 dans les gorges 34 et 36. Puis, l'ébauche 6' est fermée, par constituer la jante circulaire 6 en engageant les pions 26 et 28 portés par l'une de ses extrémités, dans l'exemple l'extrémité 6'A, dans les logements 30 et 32 correspondants de l'autre extrémité 6'B, tout en veillant à conserver les bords 64 et 66 des demi-coques 14 et 16 en place respectivement dans les gorges 34 et 36. Cette étape de « fermeture » de l'ébauche 6' peut être suivie d'une étape de soudure de ses extrémités 6'A et 6'B l'une sur l'autre.

Les dimensions respectives de la jante 6 et du carénage 12 sont telles que, en configuration fermée de la jante, celle-ci exerce l'effort E₆ qui assure un maintien en position ferme des bords 64 et 66 respectivement dans les gorges 34 et 36. En outre, la mise en tension des rayons 10, qui a lieu après fermeture de la Jante 6, concourt à augmenter l'intensité de l'effort E₆, de même que l'effort dû à la pression régnant dans le pneumatique 4, lorsque celui-ci équipe la roue 2 et est gonflé,

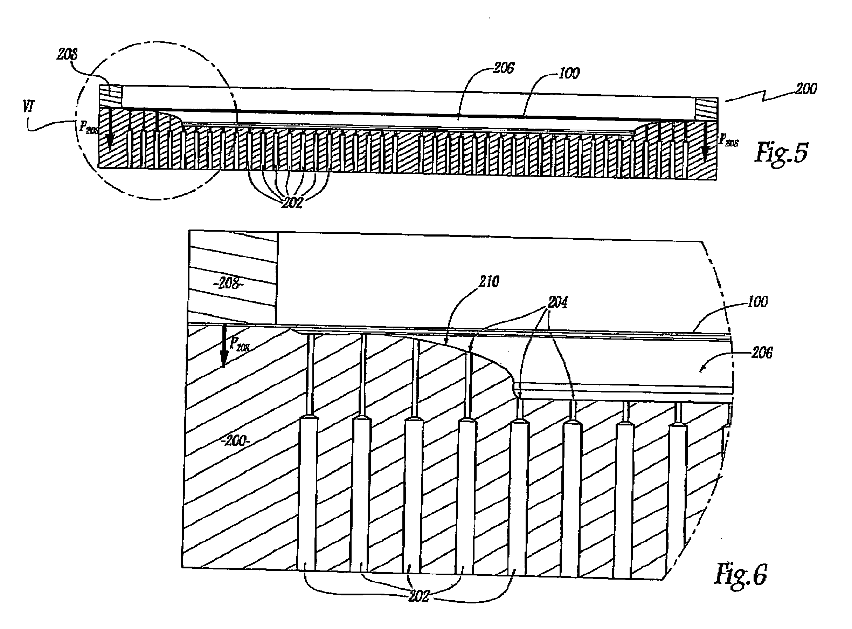

Comme il ressort des figures 5 à 12, chaque demi-coque 14 ou 16 est réalisée à partir d'une plaque de matériau thermoplastique 100 qui comprend une âme 102 en PMMA et deux couchas de finition 104 et 106. L'épaisseur totale e₁₀₀ de la plaque 100 est de l'ordre de 0,6 mm. Elle pourrait être supérieure, par exemple de l'ordre de 1 mm, pour autant qu'elle est compatible avec une mise en forme par thermoformage. Le PMMA présente l'avantage particulier d'avoir un module d'élasticité relativement élevé, de l'ordre de 3000 MPa.

Pour la fabrication de la demi-coque 14, la plaque 100 est mise en place dans un moule 200 équipé de conduits d'aspiration 202 qui débouchent par des orifices correspondant 204 dans la cavité de moulage 206. Un serre-flan 208 maintient la plaque 100 sur les bords du moule 200 et assure l'étanchéité, grâce à un effort de pression P₂₀₈ dirigé vers ce moule.

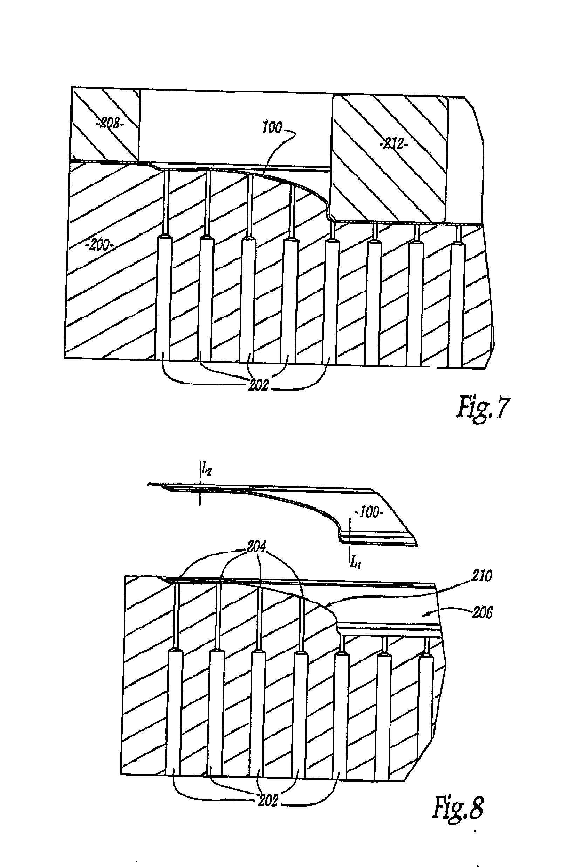

Un dispositif de chauffage radiant non représenté est disposé au-dessus du moule 200 équipé de la plaque 100 est activé pendant quelques secondes, jusqu'à ce que la plaque 100 soit portée à une température suffisante pour être déformable au moyen d'une aspiration réalisée en reliant à une source de vide non représentée les différents conduits 202. Ceci a pour effet de tirer la plaque 100 contre la surface de conformation 210 du moule 200. On passe alors de la configuration de la figure 6 à la configuration de la figure 7. Comme représenté à la figure 7, un poinçon 212 peut accompagner la descente de la plaque 100 contre la surface 210 et aider à la déformation de cette plaque. Ce poinçon 212 est optionnel.

On laisse alors refroidir la plaque 100 pendant quelques secondes, puis le poinçon 212 et le serre-flan 208 sont retirés et de l'air est injectée dans les conduits 202, ce qui a pour effet d'éjecter la plaque 100 conformée de la cavité 208, tout en la refroidissant.

On arrive alors dans la configuration de la figure 8 où la plaque thermoformée peut être dégagée du moule puis amenée à un outil de découpe où elle est découpée le long des lignes L₁ et L₂ représentées par leurs traces verticales à la figure 8. Les lignes L₁ et L₂ sont des cercles qui délimitent respectivement les bords radiaux Interne et externe de la demi-coque 14. La découpe au niveau des lignes L₁ et L₂ peut aussi être effectuée par laser, par un jet d'eau ou par tout autre moyen adapté.

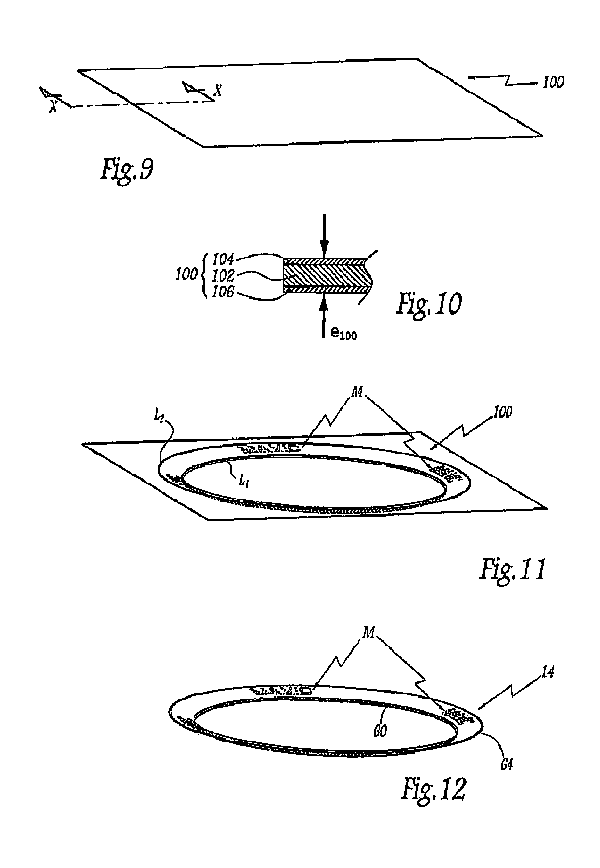

La figure 11 montre la plaque 100 en sortie du moule 200, c'est-à-dire dans la configuration de la figure 8, alors que la figure 12 montre une demi-coque 14 après les opérations de découpe le long des lignes L₁ et L₂.

Lorsque la demi-coque 14 est dans la configuration de la figure 12, on y réalise des orifices 72 de passage des rayons 10, à intervalles réguliers.

La technique de thermoformage utilisée pour constituer la demi-coque 14 permet de la décorer à plat, avant de la thermoformer dans le moule 200. Pour ce faire, la couche de finition intérieure 106 peut porter un décor apposé par sublimation d'un film décoratif. Ce décor peut être défini en tenant compte de la déformation prévue dans le moule 200 pour la plaque 100, au point que le décor a une forme esthétiquement acceptable après thermoformage.

Selon un aspect tout à fait avantageux de l'invention, le ou les matériaux thermoplastiques utilisés pour constituer la plaque 100 est ou sont transparent(s) au moins au niveau des zones sur lesquelles est appliqué le motif décoratif, ce qui permet de voir ce motif à travers la demi-coque 14, une fois celle-ci réalisée.

Ainsi, l'âme de la plaque 100 peut être réalisée non seulement en PPMA mais également en polycarbonate (PC), en Acrylonitrile-Butadiène-Styréne (ABS), en un mélange d'ABS et de PC, en polypropylène (PP), etc. Le polypropylène présente l'avantage d'être particulièrement économique, même si son module d'élasticité est relativement faible, de l'ordre de 600 MPa.

En variante, la plaque 100 peut être réalisée dans un matériau composite dont la matrice est thermoformable, cette matrice pouvant être l'un des matériaux envisagés ci-dessus. Les matrices des composites à matrice thermoplastique sont généralement du polyamide, du polypropylène ou PEEK (Polyéther ethercétone).

L'élément décoratif est de préférence apposé sur le côté intérieur de la demi-coque 14, c'est-à-dire sur la couche 106 qui constitue la face interne de la plaque 100 après thermoformage, afin qu'il soit protégé des agressions externes. A cet égard, la couche de finition extérieure 104 peut être prévue pour résister aux rayures, aux ultraviolets et aux agressions chimiques des produite de nettoyage. La couche 104 peut avoir une épaisseur de l'ordre de 1 micromètre.

Comme représenté aux figures 11 et 12, le motif décoratif M peut être un mot ou un ensemble de mots. Il peut également s'agir d'un ensemble de couleurs, d'un effet nacré, d'un effet de fluorescence, d'un dessin par hologramme, d'un aspect métallisé ou réfléchissant,...

Selon une autre approche, la décoration de la demi-coque 14 peut être obtenue par sérigraphie ou par tampographie, après thermoformage, sur l'une de ses surfaces interne ou externe.

Selon encore une autre approche, un traitement de type « physical vapor deposition » (PVD) peut être mis en oeuvre pour réaliser un dépôt de métal ou d'oxyde métallique sur la demi-coque 14, de préférence sur sa couche de finition externe 104 ou, en l'absence d'une telle couche, directement sur la face extérieure de l'âme 102. Ceci permet d'obtenir un aspect métallique pour la demi-coque 14 et concourt à sa rigidification. Ce traitement par vole PVD est effectué en déposant sur la demi-coque 14 une sous-couche conductrice de cuivre très fine, inférieure à 1 µm, puis en réalisant un dépôt électrolytique de chrome ou de nickel, avec une épaisseur de l'ordre de 0,1 mm, Ceci apporte une excellente rigidité à la demi-coque 14.

La demi-coque 16 est identique à la demi-coque 14 et réalisée par le même procédé de fabrication.

Lorsque les deux demi-coques sont fabriquées selon l'une des méthodes susmentionnées, elles sont assemblées, comme expliqué ci-dessus, pour constituer le carénage 12, avant que la jante 6 ne soit refermée autour du carénage 12.

Il est alors possible de mettre en place les rayons 10 en les engageant dans les orifices 24 de la jante 6, puis de les monter sur le moyeu 8 avant de les mettre en tension grâce aux écrous 20.

Dans les modes de réalisation de l'invention représentés aux figures 13 et suivantes, les éléments analogues à ceux du premier mode de réalisation portent les mêmes références. Dans ce qui suit, on ne décrit que ce qui distingue chacun de ces modes de réalisation du mode de réalisation des figures 1 à 12.

Dans le mode de réalisation de la figure 13, la demi-coque 16 est équipée d'une peau intérieure 80 soudée localement sur sa surface interne 82. Ceci permet de rigidifier la demi-coque 16 pour résister à un effort de flambage qui s'exerce au sein de cette demi-coque, entre son bord radial externe 66 et son bord radial interne 62, sous l'effet de l'effort E₆. La peau intérieure 80 constitue donc un raidisseur pour la demi-coque 16. Dans ce mode de réalisation, la coque 14 est également équipée d'une peau intérieure 80 formant raidisseur. Toutes les parois du carénage 12 sont donc pourvues d'un raidisseur.

D'autres structures de raidisseurs peuvent être envisagées dans le cadre de la présente invention, par exemple une structure sandwich ou un panneau de mousse.

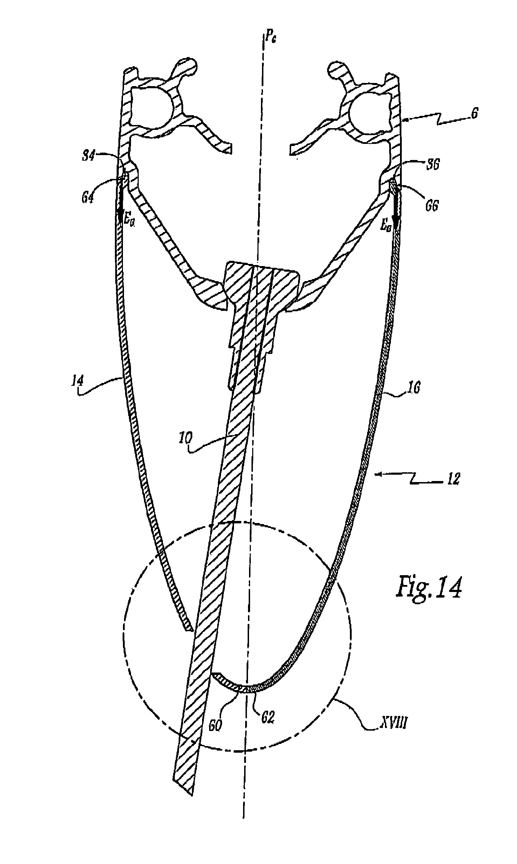

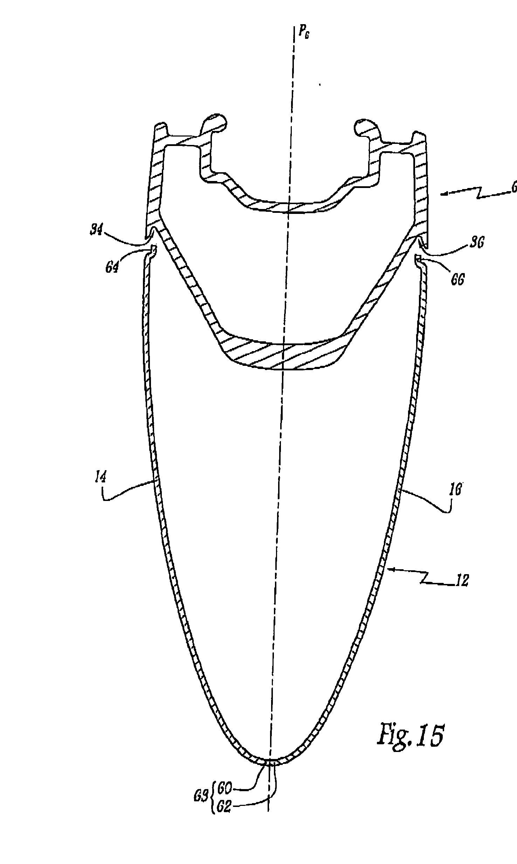

Dans le troisième mode de réalisation de l'invention représenté aux figures 14 et 15, les bords radiaux internes 60 et 62 des demi-coques 14 et 16 sont collés tranche contre tranche, ce qui rend le bord radial interne 63 plus esthétique que dans le premier mode de réalisation. En variante, ces bords peuvent être soudés ensemble.

En outre, le mode d'assemblage de la jante 6 et du carénage 12 est différent de celui du premier mode de réalisation. La jante 6 est tout d'abord constituée, sous sa forme annulaire, alors que le carénage 12 est également constitué, en collant les demi-coques 14 et 16 au niveau du bord 63.

On soumet alors le carénage 12 à une température de -40°C pendant quelques minutes, alors que la jante 6 est conservée à température ambiante, Cette température de - 40°C est sensiblement inférieure à la gamme de températures d'utilisation de la roue 2 qui est comprise entre -15°C et +45°C. Dans la mesure où le coefficient de dilatation d'un matériau thermoplastique tel que ceux envisagés ci-dessus est de l'ordre de 80.10⁻⁸/°C et dans le cas d'un carénage de diamètre égal à 600 mm environ, un refroidissement de 80°C, correspondant au passage de ce carénage d'une température de 20°C à une température de -40°C, a pour effet de réduite le diamètre des bords radiaux externes 64 et 66 des demi-coques 14 et 16 de 3 mm environ. Ceci permet de mettre en place le carénage 12 radialement à l'intérieur de la jante 6, en la centrant radialement sur l'axe central de la jante et axialement sur le plan P₆ avec les bords 64 et 66 sensiblement alignés, respectivement avec les gorges 34 et 36, comme représenté à la figure 15 qui est une coupe dans un plan radial de la roue éloigné de ses rayons 10.

On ramène alors l'ensemble formé des pièces 6 et 12 à la température ambiante, ce qui a pour effet de laisser le carénage 12 se dilater radialement au point que les bords 64 et 66 s'engagent et se verrouillent respectivement dans les gorges 34 et 36, en parvenant dans la configuration de la figure 14. Dans cette configuration, la jante 6 exerce un effort centripète E₆ qui est dirigé vers l'axe X₂ de rotation de la roue 2 et qui bloque les bords 64 et 66 respectivement dans les gorges 34 et 36.

En variante, au lieu d'abaisser la température du carénage 12, on peut envisager de chauffer la jante 6 pour la dilater radialement et permettre un assemblage selon une approche voisine de celle expliquée en référence à la figure 15.

Dans les deux méthodes envisagées ci-dessus, il est possible de monter les demi-coques 14 et 16 sur l'ébauche 6' ou sur la jante 6 avant de solidariser ces demi-coques au niveau de leurs bords radiaux respectifs 60 et 62.

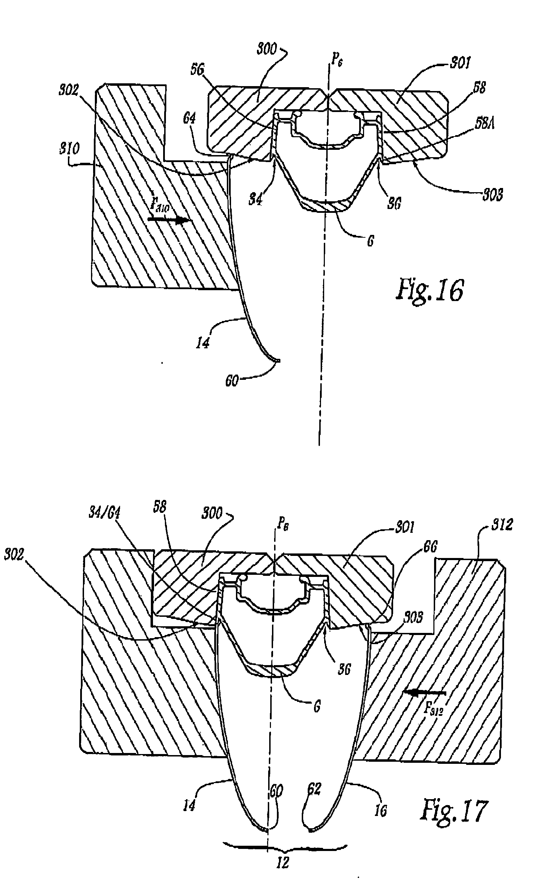

En outre, la roue 2 du troisième mode de réalisation peut être fabriquée selon la méthode représentée aux figures 16 et 17. Selon cette méthode, la jante 6 est immobilisée entre deux mors 300 et 301. Chacun des mors 300 et 301 est pourvu d'une rampe 302, respectivement 303, inclinée par rapport au plan P₆ et qui se termine au voisinage des extensions 58A et équivalente des côtés 56 et 58 de la jante 6 qui délimitent latéralement les gorges 34 et 36.

La demi-coque 14 est mise en place sur la jante 6 au moyen d'un poussoir 310 qui se déplace perpendiculairement au plan P₆, at en direction de ce plan, comme représenté parla flèche F₃₁₀. Le poussoir 310 est de préférence réalisé dans un matériau souple, par exemple en élastomére, afin d'éviter de rayer la demi-coque 14. Ce déplacement F₃₁₀ du poussoir 310 a lieu alors que le bord radial externe 64 de la demi-coque 14 glisse contre la rampe 302, jusqu'à ce que ce bord s'engage dans la gorge 34. On est alors dans la position de la figure 17 où un autre poussoir 312 peut être utilisé pour déplacer la deuxième demi-coque 16, en glissement sur la rampe 303, jusqu'à ce que son bord radial externe 65 s'engage dans la gorge 36. Les bords radiaux internes respectifs 60 et 62 des demi-coques 14 et 16 sont alors en regard l'un de l'autre et peuvent être soudés ou collés ensemble.

En d'autres termes, selon cette méthode, le carénage 12 est finalisé après le montage des demi-coques 14 et 16 sur la jante 6.

On comprend que les mors 300 et 301 sont circulaires, de sorte que les rampes 302 et 303 sont tronconiques. Ceci permet de déformer uniformément, de façon centripète et élastique, les demi-coques 14 et 16 autour d'un axe perpendiculaire au plan P₆ et passant par la centre de la jante 6, lors du glissement des bords 64 et 66 sur les rampes 302 et 303.

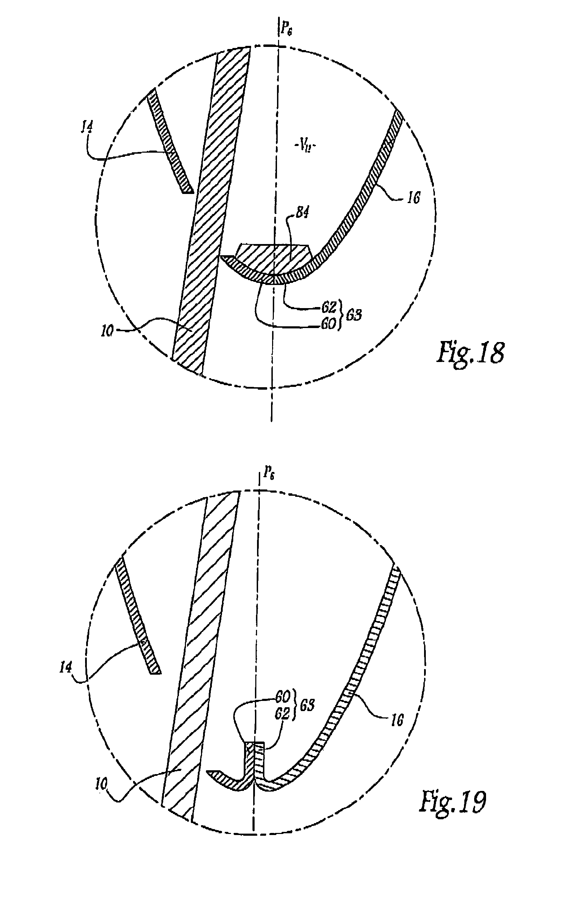

Dans la quatrième mode de réalisation de l'invention représenté à la figure 18, les bords radiaux internes respectifs 60 et 62 des demi-coques 14 et 16 sont soudés au laser, tranche contre tranche et sur un anneau de renfort 84 constitué d'un matériau ou analogue à celui formant l'âme des demi-coques 14 et 16. L'anneau 84, qui réalise la liaison entre les bords 60 et 62 est disposé dans le volume interne V₁₂ du carénage 12.

Dans la cinquième mode de réalisation de l'invention représenté à la figure 19, les bords radiaux internes 60 et 62 des demi-coques 14 et 16 sont soudés au laser, face latérale contre face latérale, et dans le volume intérieur V₁₂ du carénage 12, ce qui confère au bord radial interne 63 de ce carénage un aspect particulier, vu de l'extérieur.

Dans ce mode de réalisation, il est nécessaire de procéder au repliage à chaud des bords radiaux Internes 60 et 62 après la découpe de la plaque 100 et avant le soudage de ces bords.

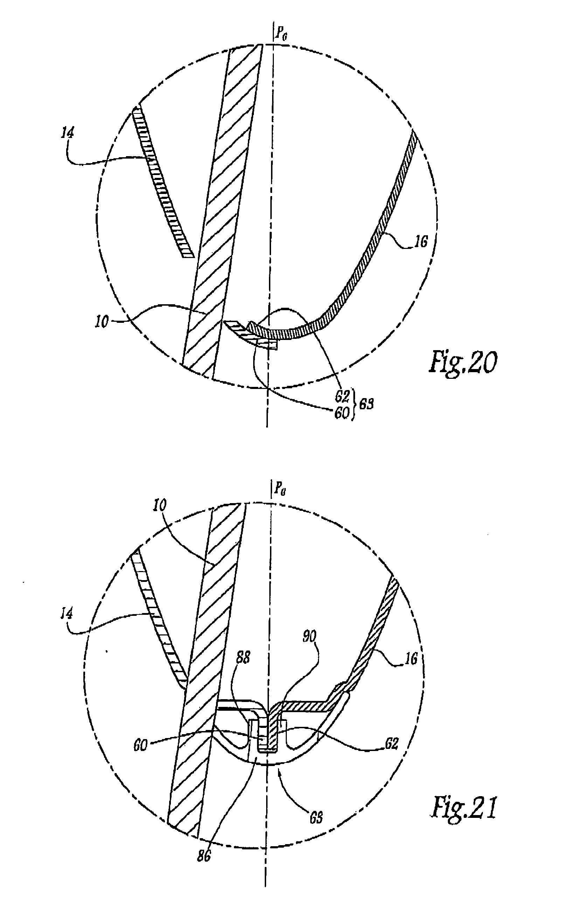

Dans la sixième mode de réalisation de l'invention représenté à la figure 20, le bord radial interne 80 de la demi-coque 14 recouvre sur l'extérieur le bord radial interne 52 de la demi-coque 16 et ces bords sont soudés ensemble, face latérale contre face latérale, Dans ce cas, les coques 14 et 16 ne sont pas exactement identiques.

Dans la septième mode de réalisation de l'invention représenté à la figure 21, les bords radiaux internes 60 et 62 des demi-coques 14 et 16 sont assemblés grâce à un anneau de finition 86 clipé sur ces bords 60 et 62 au moyen de deux nervures Internes 88 et 90. L'anneau 86 forme donc une baguette d'assemblage des demi-coques 14 et 16 qui constitue le bord radial interne 63 du carénage 12. De façon optionnelle, les bords 60 et 62 peuvent être collés ensemble ou soudés ensemble, avant la mise en place de l'anneau 86.

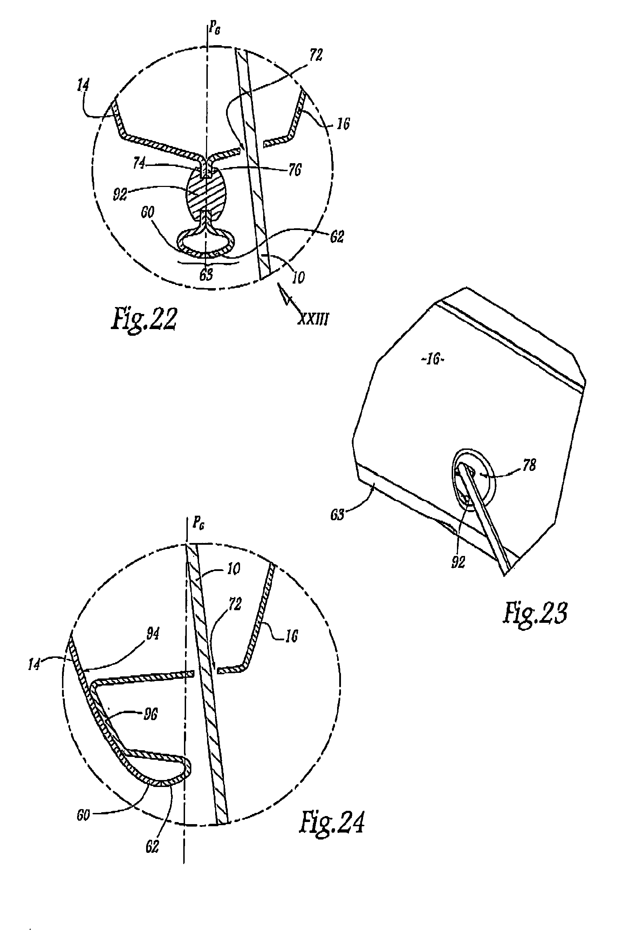

Dans le huitième mode de réalisation représenté aux figures 22 et 23, des rivets 92 traversent les demi-coques 14 et 16 à proximité de leurs bords radiaux internes respectifs 60 et 62. Ceci est obtenu en emboutissant localement les demi-coques 14 et 16 lors de leur thermoformage, de façon à créer deux voiles 74 et 76 des demi-coques 14 et 16 qui sont parallèle au plan P₆ et qui se touchent le long de ce plan, ce qui permet la mise en place des rivets 92.

En variante, on pourrait utiliser des boulons à la place des rivets 92, voire souder ensemble les portions 74 et 76 des demi-coques 14 et 16.

Comme il ressort de la figure 23, l'emboutissage localisé des demi-coques 14 et 16 crée une zone 78 de passage d'un rayon 10. Le rayon 10 traverse la demi-coque 16 dans une partie de celle-ci qui est beaucoup plus inclinée par rapport au plan P₆ que dans les autres modes de réalisation. Ceci induit que l'orifice 72 de passage du rayon 10 peut avoir des dimensions transversales sensiblement inférieures à celles utilisées dans les modes de réalisation précédents.

Dans le neuvième mode de réalisation de l'invention représenté à la figure 24, la demi-coque 16 est pourvue de huit emboutissages profonds, au voisinage de son bord radial interne 62 au point qu'un voile 95 de la demi-coque 16 vient en appui contre la surface interne 94 de la demi-coque 14. Il est alors possible de coller ou de souder le voile 96 sur la surface 94.

Comme dans le mode de réalisation précédent, l'orifice 72 de passage d'un rayon 10 peut avoir des dimensions transversales relativement petites, dans la mesure où la portion de la demi-coque 16 traversée par le rayon 10 est très inclinée par rapport au plan P₈.

Les caractéristiques techniques des différents modes de réalisation définis ci-dessus peuvent être combinées entre elles. En particulier, lorsqu'un soudage est mentionné ci-dessus entre les bords radiaux Internes 60 et 62 des demi-coques 14 et 16, d'autres moyens de solidarisation peuvent être envisagés, notamment un collage ou un assemblage mécanique au moyen de rivets, de boulons ou par clipage.

Les roues des différents modes de réalisation et variantes envisagées ci-dessus peuvent être fabriquées, au choix, selon l'une ou l'autre des méthodes envisagées respectivement en référence aux premier et troisième modes de réalisation.

L'invention est représentée sur les figures ci-jointes dans le cas où la jante 6 est équipée de nervures 38 et 40 d'accrochage d'un pneumatique à tringles ou à bourrelets. Elle est applicable avec tout type de jante, notamment avec une jante pourvue d'une surface de collage d'un boyau.

Selon des variantes non illustrées de l'invention, le carénage 12 peut être réalisé non seulement en matériau plastique thermoformé mais également en matériau plastique moulé par Injection, en matériau composite, en aluminium ou en alliage d'aluminium.

## Revendications

1. Roue (2) pour cycle à rayons tendus (10), entre un moyeu (8) et une jante (6) pourvue de moyens (38, 40) de réception d'un pneumatique (4), cette roue étant équipée d'un carénage (12) rapporté sur la jante, **caractérisée en ce que** la jante (6) est pourvue de deux gorges (34, 36) de réception de deux bords radiaux externes (64, 66) du carénage (12) et **en ce que** la jante exerce, au niveau des deux gorges (34, 36), un effort centripète (E6) de blocage des bords radiaux externes (64, 66) du carénage dans les gorges.

2. Roue selon la revendication 1, **caractérisée en ce que** chaque gorge (34, 36) a une profondeur radiale (P36) supérieure à 0,6 mm, de préférence supérieure à 0,8 mm, de préférence encore égale à 1 mm.

3. Roue selon l'une des revendications précédentes, **caractérisée en ce que** les deux bords radiaux externes (64, 66) du carénage (12) s'étendent en retrait (d66), vers l'intérieur du carénage (12), par rapport à la surface extérieure (68, 70) du carénage.

4. Roue selon l'une des revendications précédentes, **caractérisée en ce que** la jante (6) est en aluminium, ou en alliage à base d'aluminium, et le carénage (12) est en matériau plastique, injecté ou thermoformé, en matériau composite à matrice thermoplastique ou thermodurcissable, en aluminium ou en alliage d'aluminium.

5. Roue selon l'une des revendications précédentes, **caractérisée en ce que** le carénage (12) comprend deux demi-coques (14,16) formant chacune l'un des bords radiaux externes (64, 66) de ce carénage, ces demi-coques étant solidarisées ensemble au voisinage d'un bord radial interne (63) du carénage.

6. Roue selon l'une des revendications précédentes, **caractérisée en ce que** le carénage (12) est réalisé en matériau plastique thermoformé.

7. Roue selon l'une des revendications précédentes, **caractérisée en ce que** chaque paroi (14, 16) du carénage est équipée d'un raidisseur (80).

8. Roue selon l'une des revendications 5 à 7, **caractérisée en ce que** les demi-coques (14, 16) sont solidarisées ensemble par soudage, collage ou assemblage mécanique de deux bords radiaux internes (60, 62) appartenant respectivement aux demi-coques.

9. Roue selon la revendication 8, **caractérisée en ce que** les bords radiaux internes (60, 62) des deux demi-coques (14, 16) sont soudés ensemble, face latérale contre face latérale ou tranche contre tranche.

10. Roue selon la revendication 8, **caractérisée en ce que** les bords radiaux internes (60, 62) des deux demi-coques (14, 16) sont soudés sur un anneau de liaison (84) disposé dans le volume interne (V12) du carénage (12).

11. Roue selon l'une des revendications précédentes, **caractérisée en ce que** l'épaisseur des bords radiaux externes (64, 66) du carénage (12) est légèrement supérieure à la largeur du fond des gorges (34,36).

12. Méthode de fabrication d'une roue (2) selon l'une des revendications précédentes, **caractérisée en ce qu'**elle comprend des étapes consistant à :
a) fabriquer une ébauche ouverte (6') de jante en ménageant, sur un côté de l'ébauche destiné à être tourné vers le moyeu, deux gorges (34, 36) ;
b) fabriquer le carénage (12) ;
c) engager les deux bords radiaux externes (64, 66) du carénage dans les deux gorges (34, 36), sur une partie de leur circonférence ;
d) fermer l'ébauche (6') autour du carénage (12) en maintenant les bords radiaux externes (64, 66) du carénage en place dans les gorges (34, 36) ;
e) monter les rayons (10) sur la jante 6) :
f) monter les rayons sur le moyeu (8) ; et
g) mettre en tension les rayons.

13. Méthode de fabrication d'une roue (2) selon l'une des revendications 1 à 11, **caractérisée en ce qu'**elle comprend des étapes consistant à :
a') fabriquer une jante circulaire (6) pourvue de deux gorges (34, 36) sur son côté destiné à être tourné vers la moyeu (8) ;
b') fabriquer le carénage (12) ;
c'1 porter le carénage (12) à une température inférieure à la plage de températures d'utilisation normale de la roue ou porter la jante (6) à une température supérieure à la plage de températures d'utilisation normale de la roue ;
c'2) disposer le carénage (12) radialement à l'intérieur de la jante (6), avec les bords radiaux externes (64, 66) du carénage (12) en regard des gorges (34, 36) de la jante ;
d') porter le carénage (12) et la jante (6) à température ambiante ;
e') monter les rayons (10) sur la jante (6) ;
f') monter les rayons sur la moyeu (8) ; et
g') mettre en tension les rayons.

14. Méthode de fabrication d'une roue (2) selon l'une des revendications 1 à 11, **caractérisé en ce qu'**elle comprend des étapes consistant à :
a") fabriquer une jante circulaire (6) pourvue de deux gorges (34, 36) sur son côté destiné à être tourné vers le moyeu (8) ;
b") fabriquer deux demi-coques (14, 16) constitutives du carénage (12) ;
c"1) monter (F310) une première demi-coque (14) sur la jante en engageant un bord radial externe (64) de la première demi-coque dans une première gorge (34) de la jante, parmi ses deux gorges ;
c"2) monter (F312) une deuxième demi-coque (16) sur la jante en engageant un bord radial externe (66) de la deuxième demi-coque dans la deuxième gorge (36) de la jante, parmi ses deux gorges ;
d") solidariser ensemble les bords radiaux internes respectifs (60, 62) des première et deuxième demi-coques (14, 16) ;
e") monter les rayons (10) sur la jante ;
f") monter les rayons sur le moyeu ; et
g") mettre en tension les rayons.

15. Méthode selon l'une des revendication 12 à 14, **caractérisée en ce que** la tension des rayons (10) et/ou la pression d'un pneumatique (4) monté sur la jante est utilisée pour exercer sur la jante l'effort centripète (E6) qui concourt au frettage des borde radiaux externes (64, 66) du carénage (12) dans les gorges (34, 36) de la jante (6).
